# EUROPEAN PATENT SPECIFICATION

(11) **EP 1 151 600 B1**
(45) Date of publication and mention of the grant of the patent: **28.08.2002**
(21) Application number: 00901238.6
(22) Date of filing: 28.01.2000
(51) Int. Cl.: H04N 1/21

(54) **DIGITAL CAMERA WITH SOUND RECORDING**
DIGITALE KAMERA MIT AUDIOAUFNAHME
APPAREIL NUMERIQUE DE PRISE DE VUES ENREGISTRANT LE SON

(30) Priority: 12.02.1999 EP 99301045
(43) Date of publication of application: 07.11.2001
(73) Proprietor: Hewlett-Packard Company, A Delaware Corporation, Palo Alto, CA 94304 (US)
(72) Inventor: FROHLICH, David Mark, Bristol BS9 3SS (GB); HICKEY, Marianne, Bristol BS7 8RQ (GB)
(74) Representative: Lawrence, Richard Anthony
(86) International application number: GB0000242
(87) International publication number: WO00048388

(56) References cited:
- EP-A- 0 542 377
- WO-A-98/12868
- US-A- 4 924 303

## Description

The present invention relates to a digital camera adapted to allow recording of sound as well as still images. In particular, the invention relates to a digital camera arrangement designed to support the construction of different combinations of sound and images.

It is known that the combination of a still image and sound is a valuable one for the user, not only where the sound is provided as annotation, but also where the sound is ambient at the time of recording the still image. Examples of systems adapted for recording both still images and sound together are disclosed in US Patents Nos. US-A-3439598, US-A-4270853, US-A-4270854, US-A-4905029 and US-A-5276472. A system for display and playback of composite sound and still image is set out in European Patent Application Publication No. EP-A-0827018. This combination of sound and still image is also obtainable from certain digital video cameras which have capacity to capture still images - an example is the Hitachi MP-EG1A.

A camera operating system which supports augmentation of still images with sound is Digita, provided by Flashpoint Technology, Inc. Digits provides a menu-driven interface, and also scripts which allow construction of composite items at the camera (such as a page written in HTML with camera-captured image inserts). See, for example, WO-A-98/12868.

In existing products, the sound capture is generally optimised for annotation, rather than for recording of ambient sound. Accordingly, the microphone is directed towards the user rather than to the imaged scene, the sound is recorded after the image is captured, and the combination of media is limited to one sound clip per image. Although capture of ambient sound is a known use of cameras with sound capture features, existing arrangements still provide a simple relationship of association between a single still image and a single piece of sound.

It is desirable to improve the capture of sound together with still images to allow a rich combination of the two which will provide particular benefits to the user.

### Summary of Invention

Accordingly, the invention provides a digital camera comprising: camera apparatus for capturing still images; sound recording apparatus for capturing sound passages; a memory for retaining still images as still image files and sound passages as sound passage files; and a user interface adapted for selectively linking one or more still image files with one or more sound passage files to form a linked group, and for selectively unlinking one or more files from a linked group.

Still image files and sound passage files may be files of different types, in which case selective linking between files may be recorded in an index file containing all linkage information. Alternatively, linked groups may have a specific multimedia filetype supporting still image files, sound passage files, and links therebetween: in this case, still images and sound passages may also themselves be provided in this filetype, as it possesses the inherent capacity to be either a still image file, a sound passage file, or both.

By treating the images and sound as equivalent forms of data in this way, rather than merely considering a sound passage as an optional addition to a still image, richer possibilities for creation and editing of associated sound and image data become available. This equivalence makes selection of sound and image to be matched together straightforward. Advantageously, it also allows for creation of more complex objects, with a linked group containing any of one still image file with one or more sound passage files; one sound passage file with one or more still image files; or even a plurality of both sound passage files and still image files. This flexibility is particularly important where ambient sound is to be captured: for example, a desirable approach may be to record the sound, and during recording of the sound to capture a large number of still images, deciding at a later point which images to keep. With a system in which sound is provided through annotation of a single image, this desirable mode of operating is simply not possible.

Advantageously, the user interface is adapted such that a user can select a first and second view of the image files, wherein in the first view a plurality of sound passage files, still image files or linked groups are displayed in an index format for browsing, and wherein in the second view a single sound passage file, still image file or linked group is displayed for review and editing (including modification of any link). It is helpful if in this second view an additional sound passage file, still image file or linked group is also displayable, and the user interface is adapted to allow linkage between the displayed files to form a new linked group. Another desirable feature is for the sound passage files and still image files of a linked group to be viewable, selectively, either as part of the linked group or independently of the linked group. Another useful feature is for the user interface is adapted so that the sound passage files, the still image files, and the linked objects are all presentable to the user as a separate sequence, and that the user may select between these separate sequences for browsing. This collection of features allows effective browsing through a collection of captured data, and effective combination and review of the data collected.

It is particularly useful, especially in the case of more complex linked groups, for the digital camera to be adapted such that a still image file may be associated with a particular point of time or period of time in the sound passage of a sound passage file. This is valuable if images and sound passages can be captured contemporaneously. In connection with this, it is desirable for there to be a means to mark a captured still image or a captured sound passage with the time of recording. This time stamping can either be absolute, or in the case of contemporaneous recording, relative (that is, an image is stamped with its time of recording relative to the start of the sound passage). Contemporaneous recordings of sound and still images may be provided automatically as linked groups. This structure allows valuable forms of image association to be created, such as an assemblage of still images appearing in a determined succession and spacing against a common passage of ambient sound.

In a development of this approach, embodiments of a camera may include a further data recording device for recording of another data type, and wherein the memory device is adapted to record the other data type as a further data type file, and wherein the user interface is adapted for selectively linking one or more further data type files into a linked group, and for selectively unlinking one or more further data type files from a linked group. These further data types may be graphic annotation (for example, handwriting input) or video clips.

### Description of Figures and Specific Embodiment

Specific embodiments of the invention are described below, by way of example, with reference to the accompanying drawings, in which:
Figure 1 shows a system for the capture and reproduction of sound and still images according to an arrangement proposed by the present applicant;
Figures 2a, 2b and 2c show front (image and sound capture) side, rear (user interface side) and top (capture button) views of a digital camera in accordance with an embodiment of the invention;
Figures 3a to 3c show the user interface display of Figure 2 in editing mode, and illustrate selection of different data elements;
Figure 4 shows the user interface display of Figure 2 in editing mode, and shows an audiophoto consisting of a sound passage with three attached images;
Figures 5a to 5c show the user interface display of Figure 2 at three different stages during the playing of the audiophoto of Figure 4;
Figure 6 shows the user interface display of Figure 2 in editing mode showing an index image of captured data; and
Figures 7a and 7b show the user interface display of Figure 2 in capture mode, and illustrate respectively a viewfinder display and an index display.

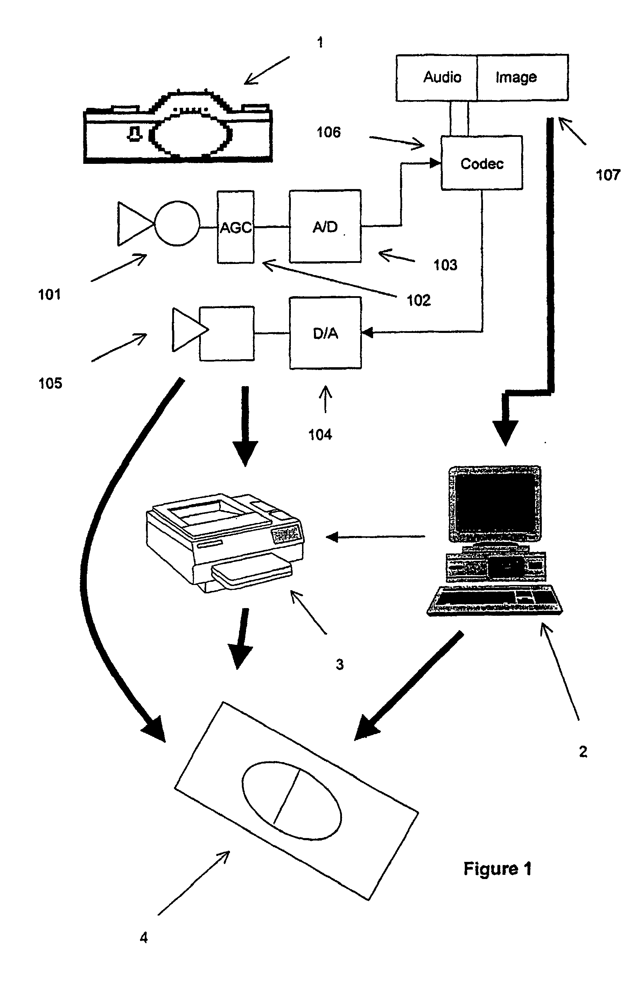

Basic components in a system for providing an image and related sound are shown in Figure 1. A camera 1 comprises a conventional digital camera mechanism for capturing a still image together with a digital sound recording device for recording a passage of sound. Sound recording means are conventional: a microphone 101, an automatic gain controller 102, an analog/digital converter 103 and a codec 106 - where playback is also available, as in the embodiment to be described below, a loudspeaker 105 and a digital/analog converter 104 are also provided. A memory 107 for storage of audio and image information is also required.

It should be noted that although the term "image" is used here, it does not refer merely to a pictorial image. It may also relate to, for example, text captured in an image format. Likewise, when the term "camera" is used, other devices for capturing a still image can be understood to fall within its scope in the context of the present invention.

Whereas the process of image and sound capture may be entirely analog, in which case both an analog image recording medium (such as film) and an analog sound recording medium are provided at the camera, in the context of the present invention digital capture of both sound and image is used. Both image and sound are digitized on capture and stored in an appropriate storage medium (for example on a conventional flash memory or an Iomega "Clik" disk ("Clik" is a trade mark of Iomega Corporation)). In this event, the digital data can be provided to a digital processing means (such as personal computer 2). This is advantageous, as it allows for easy editing of both image and sound data. The image data can then be provided from the digital processing means as a printed image, and the passage of sound attached thereto in a digital electronic storage medium, such as a flash memory. This is best achieved by means of a printer 3. In printer 3, the image is printed in conventional manner and a sound reproduction device with the passage of sound recorded thereon is attached to the image. Advantageously, recording and attachment of sound is done in the printer itself, but this step may be carried out separately (for example, at the sound recording device 4, as is described further below). Alternatively, it is possible in some embodiments for the image data and optionally the sound data to be provided directly from the camera to the printer (for example by infra red data transfer using technologies currently known for infra red printing from personal computers - such as under the IrTranP standard): these arrangements may require the processor in camera 1 to be provided with a printer driver for the appropriate printer.

The result is a tangible representation of the image with an electronic storage medium having the passage of sound recorded thereon attached to it: this is here termed an "audiophoto". To play the passage of sound, sound reproduction device 4 is employed. This can be connected to the electronic storage medium to enable information stored in the electronic storage device to be transferred to the sound reproduction device, the sound reproduction device 4 containing means to convert the information received from the electronic storage device into the passage of sound. However, sound reproduction device 4 is adapted to be detachable or otherwise remote from the printed image when no connection between the electronic storage device and the sound reproduction device is required.

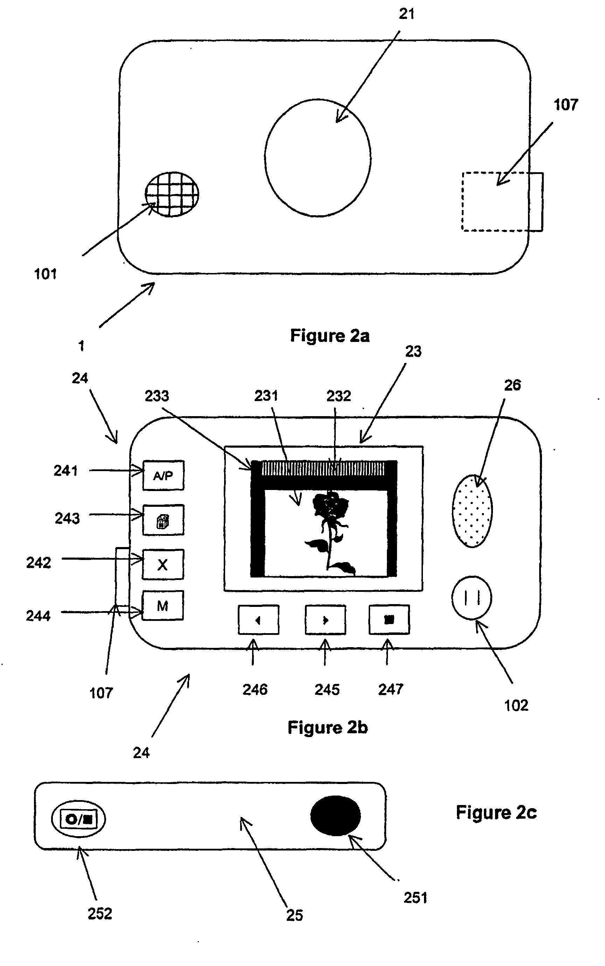

Further details of these system elements are provided in copending European Patent Application No. EP-A-0 971 260. A digital camera 1 which is an embodiment of the present invention will now be discussed below, with reference to Figures 2a to 2c.

Figure 2a shows the front (image capture) side of a digital camera 1 according to an embodiment of the present invention. In basic form, digital camera I is a conventional handheld camera. This camera is optimised for capture of ambient sound, rather than annotation of images, so in addition to a conventional digital camera apparatus for capturing still images shown here by lens 21, the front side of the camera 1 also has the microphone 101 of a sound recording apparatus (of the kind discussed with reference to Figure 1) for capturing sound passages. In a digital camera optimised for annotation, this microphone 101 would be placed on the rear (user interface) side of the digital camera 1 - alternatively, dual microphones, or means to reorient the microphone for capture from different directions at different times, may be provided. The captured images and sound are eventually stored (in formats and associations discussed below in the context of the user interface of the digital camera) on a memory for retaining still images as still image files and sound passages as sound passage files. This memory comprises a removable flash memory card 107 held in a slot on the side of the camera, and released from the slot by a button release.

Figure 2b shows the rear (user interface) side of the digital camera 1. The display 23 is (preferably) an LCD or other flat screen display. The display can be used either for image and sound capture (capture mode) or for image and sound editing (editing mode) - both capture mode and editing mode are discussed further below. The display 23 is shown in Figure 2b in editing mode, with an audiophoto image shown with three display elements: image element 231, sound element 232, and selection element 233, all of which will be addressed below in the discussion of editing mode. Switch 26 is used to allow the user to toggle between capture mode and editing mode. Also provided on the user interface side of the digital camera is loudspeaker 102, so that audio playback is directed towards the user.

The user interface controls 24 are provided on the user interface side of the digital camera. The user interface controls 24 are used to browse, organise and edit the captured images and sound, and in particular to allow selective linking of one or more still image files with one or more sound passage files to form a linked group, and for selectively unlinking one or more files from a linked group. The specific functions of different buttons will be described in greater detail in the discussion of the editing mode, but a brief summary is as follows:
data type selection button 241 allows selection of image, sound or both as "active";
deletion button 242 allows deletion of the current active element;
linking/unlinking button 243 allows selected elements to be linked or unlinked;
marking button 244 allows a sound clip to be marked (for reasons discussed further below);
forward button 245 allows a user to step forward throughout data while browsing, or to play a sound passage;
backward button 246 allows a user to step backward throughout data while browsing; and
stop button 247 allows a user to stop playing of a sound passage.

Figure 2c shows a top view of the camera 1. The top of the camera is where data capture controls 25 are located. Data capture controls 25 are essentially conventional: there is an image capture button 251 easily operable with the right hand to record an image, and a dual state sound capture start button 252 easily operable with the left hand to begin recording of sound on a first button press and to end recording of sound on a second button press.

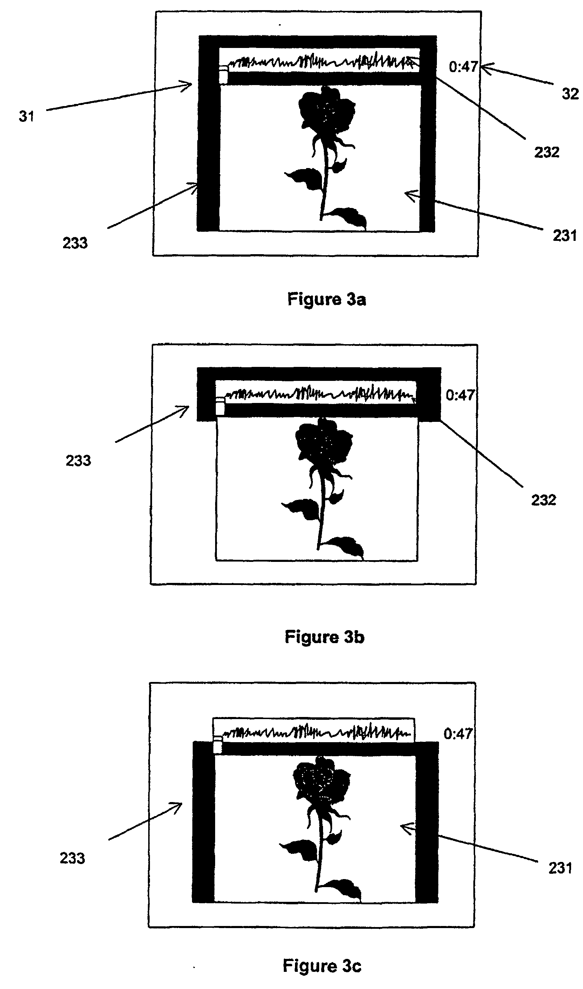

Editing mode will now be discussed with reference to Figures 3 to 6.

Figure 3a shows an audiophoto in editing mode. The audiophoto consists of a still image 231 and a sound passage (provided as a graphical representation 232 of the sound). The sound passage is marked with a tag 31 to indicate the association of an image with it - the position of the tag 31 is indicative of the time along the sound stream represented by the graphical representation 232. The sound passage is also marked with its duration 32. Selection element 233 indicates in Figure 3a that the whole audiophoto is selected. The selection element can be toggled between the states of audiophoto/sound element/image element by pressing the data type selection button 241.

When the audiophoto is selected as in Figure 3a, the options provided by the different user interface buttons are as follows. Forward button 245 causes the display to advance to, and play, the next audiophoto. Backward button 246 causes the display to move to, and play, the previous audiophoto. Stop button 247 causes the sound passage to stop playing. Linking/unlinking button 243 is for linking or unlinking the displayed elements: for an audiophoto, the display at any one time will be showing an image element 231 and a sound element 232 that are linked to each other. Pressing the linking/unlinking button 243 with an audiophoto selected will generally be used to enable the linkage between the image element 231 and the sound element 232 to be broken: the result could be separated image and sound, separated audiophoto and sound, separated audiophoto and image, or even two separated audiophotos (if both the image and the sound have additional attachments) - it can also be used to modify the link. Both deletion and modification of links are discussed below with reference to Figure 3b. The deletion button 242 in this mode causes deletion of the selected audiophoto (confirmation by pressing a different designated key would be required in an effective practical interface), and marker button 244 is used to mark the sound passage 232, as is discussed further below with reference to Figure 3b.

If instead the sound passage is selected, as in Figure 3b, then the meaning of the buttons will be different in some cases. The forward button 245 and the backward button 246 now cause display, and play, of the next and previous sound passage respectively. No change is made to the displayed image. Consequently, selection of sound passages only can be used to allow cycling through sound clips to find a clip for attachment to the presently displayed image. Stop button 247 is used to stop playback of a sound clip. Deletion button 242 is used to delete the selected sound passage. Linking/unlinking button 243 is now used essentially for creating or removing links between the selected sound and the currently displayed image. Pressing the button 243 causes a link to be established - or if a link already exists between the sound passage and the image, for that link to be removed. This link may represent a relationship in time between the sound passage and the image: in particular, for which parts of the sound passage the image is to appear. There may be a simple one to one relationship with no element of time (in which case, the image will simply be associated with the beginning of the sound passage), but there may be a sequence of images appearing successively at different times during the sound passage. To support this, the user interface provides means on creation of a link to position that link within the sound passage. When the link is created, it will appear provisionally at the start of the sound passage (unless capture was contemporaneous - see below), and can be moved forward or backward along the sound passage by use of markers, as described below. In a variant of this approach, if capture of images and sound are time stamped (either absolutely, or if contemporaneously captured images and sound are time stamped relative to each other), the initial position of a link between contemporaneously recorded sound and images can be at the actual point of capture of the image within the sound record.

Use of marking within the sound record can be used to improve construction of the relationship between images and sound. While a sound passage is playing, pressing of the marker button 244 places a marker (not shown in Figure 3a or Figure 3b, but visible as a visual symbol in sound record 232) in the sound record at a time corresponding to the point in the sound record at which the marker was pressed. When the sound record is not playing, pressing of the marker button 244 places the sound clip into a state in which the markers can be used for editing. Initially, a passage in the sound record up to the point of the first marker is selected. Pressing forward button 245 advances selection to the first marker itself, and further pressing forward button 245 advances selection to the passage of sound between the first and second markers. Pressing the button again advances to the second marker, and successive presses alternate between selection of markers and intervening passages until the end of the sound clip is reached, at which point the process starts again from the beginning of the clip. In this way, either a marker itself, or the sound passage between two markers, can be selected. By use of the backward button 246 it is possible to cycle through the markers and intervening passages in the opposite direction. In this way, a marker or intervening passage may be selected and either deleted with delete button 242 (and so edit the sound clip itself) or used to set up a link with an image (by using linking/unlinking button 243), the link thus establishing either when the image will display within the resulting audiophoto (if the link is with a marker) or over what period of time within the resulting audiophoto that the image will display (if the link is with an interval).

The alternative to selecting the audiophoto or selecting the sound passage is to select the image, and this is shown in Figure 3c. The forward button 245 and the backward button 246 now cause display of the next and previous images respectively. No change is made to the displayed sound passage. Consequently, selection of images only can be used to allow cycling through all the images for attachment to the presently displayed sound passage. Deletion button 242 is used to delete the selected image. Linking/unlinking button 243 is now used essentially for linking the selected image with the currently displayed sound, using principles discussed above in relation to Figure 3b.

Although not shown here, practical embodiments will require a confirmation step for significant events, such as deletion of an audiophoto, image or sound clip. Advantageously, an "undelete" function will also be provided to allow deletions to be recovered to whatever extent is practical.

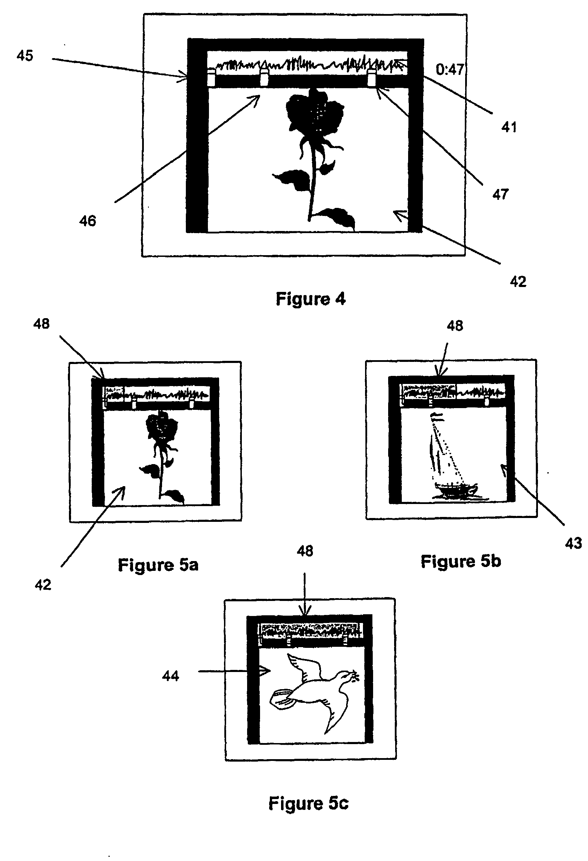

A highly advantageous feature of the embodiment of the present invention is that it supports audiophotos that are more than a simple association of a sound passage with an image: in particular, an audiophoto may comprise a sound passage with one or more images, each of which has a relationship in time with the sound passage, or alternatively a collection of more than one sound passage with one or more images. An example of an audiophoto with a single sound passage but a plurality of images is shown in Figures 4 and 5. Figure 4 shows the initial view of such an audiophoto, with the audiophoto selected but the sound not playing. There are three images 42, 43, 44 associated with the sound passage represented by trace 41, each of which are represented in the trace 41 by a discrete clip icon 45, 46, 47. The clip icons are located in positions corresponding to the point in the sound passage at which they are intended to appear. The change in the display as the sound passage plays is shown in Figures 5a to 5c.

Clip icon 45 is located at the start of the sound passage, so image 42 is displayed from the beginning of the sound passage. A visual representation for the amount of the sound passage so far played is provided by a background bar 48 behind trace 41. In Figure 5a, it can be seen that the sound passage is part played, but that the second clip icon 46 has not yet been reached. In consequence, the first image 42 is being displayed. When the second clip icon 46 position is reached, then the second image 43 will be displayed. Figure 5b shows display of the second image 43 at a point during playback of the sound passage after the second clip icon 46 has been reached but before the third clip icon 47 has been reached. After the third clip icon 47 has been reached, the third image 44 is displayed. In this case, each of the images is associated with a point in time (indicating the beginning of display of that image) rather than a period of time (as would be the case if the image was linked, through use of markers, with a part of a sound clip). There is no basic difference between the two situations - however, linking with passages of time can be used to provide dark intervals between pictures, or overlaps.

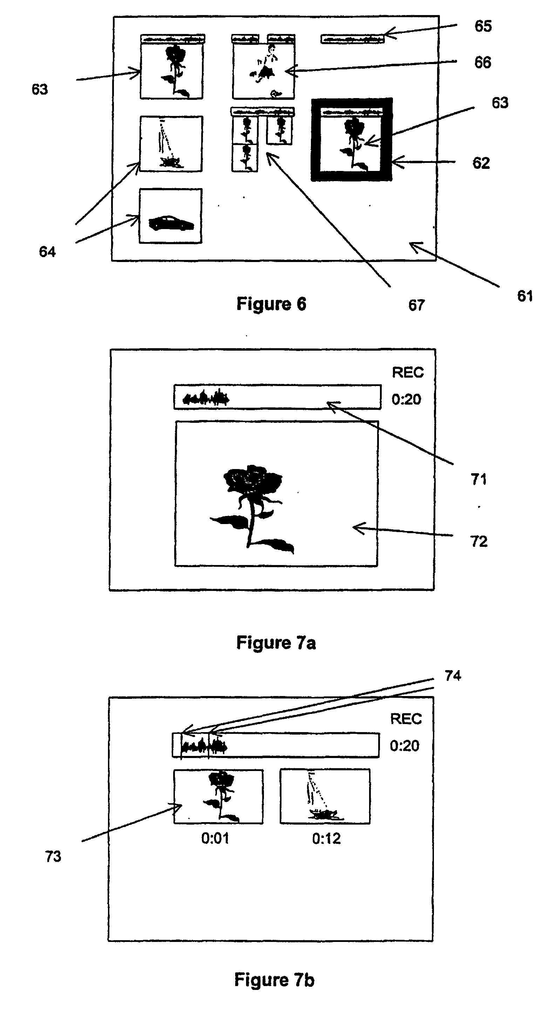

It is desirable for there to be a view of the various available audiophotos and elements which renders it easier to compare different elements, or to move between elements to be edited. Accordingly, the editing mode may also provide an index view for viewing multiple elements, or collections of elements. Such an index view 61 is illustrated in Figure 6. This index view includes all elements that are not part of an existing audiophoto, together with existing audiophotos. A selection frame 62 is provided to allow selection for viewing and playing (as in Figure 3a to 3c) of a particular element or audiophoto - such selection can be achieved through use of forward button 245 and backward button 246. Delete button 242 is used to delete the elements within selection frame 62. An appropriate button combination is used to switch between single audiophoto view and index view. When in index view, transition to single audiophoto view is achieved by pressing data type selection button 241 while stop button 247 is being pressed. The reverse transition from single audiophoto view to index view can be achieved by the same button combination. When switching from index view to single audiophoto view, the display 23 will change to contain the element or elements within the selection frame 62 in single audiophoto view.

It is possible from the index view to determine whether a particular entry is an image, a sound passage, a simple audiophoto or a more complex audiophoto (not a simple 1:1 relation of image and sound). Images 64 and sound passages 65 are readily identifiable as they contain no sound trace and no image respectively. Simple audiophotos 63 can be seen to contain one sound trace and one image. More complex arrangements, such as a single image with two sound clips 66 or a single sound clip with multiple images 67, are again clearly identifiable as instead of providing a representation indicative of the start (or any other point) of the sound passage, an icon is provided for every element. For example the image 66 with two sound clips has a single image shown but two sound traces shown: however, the image 67 with a single sound clip but three images shows all three images in the image view 67, rather than just a single image associated with a particular point in time. The image view is thus an effective way to determine quickly the composition (at least the image composition) of existing audiophotos.

Different forms of image view are possible. An alternative could be to show all images, or all sound samples, or all audiophotos, and to toggle between these alternatives with the data type selection button 241. Another alternative would be to provide separate index displays of sound passages and images. Images and sound samples could be displayed according to their time of capture (particularly appropriate if some form of absolute time stamping is available).

By pressing button 26, the camera is switched between editing mode as discussed above, and capture mode. The initial image in capture mode will be as for a conventional digital camera: a simple image indicating what would be recorded if at that point image capture button 251 were to be pressed. If the image capture button 251 is pressed at this point, then a simple image results (like images 64 in Figure 6). However, the position changes when recording of a sound passage is initiated by pressing sound capture button 252. This causes the display to appear as shown in Figure 7a, with a sound bar 71 showing the build up of the sound passage (the length of sound so far captured, together with an indication that recording is in progress, are also provided) and a viewfinder image 72 below. If sound recording stop button 253 is pressed before image capture button 251 is pressed, then a pure sound passage will be recorded, like sound passage 65 in Figure 6. However, if image capture button 251 is pressed while sound recording is building up, then a contemporaneous sound and image capture occurs. Advantageously, this links the captured image and the sound passage 71 directly, with the link registered for initial purposes at the point during the sound passage at which the image capture occurred (of course, the time relationship in the link can be changed at a later point through editing).

If an audiophoto is built up in this way, it is desirable for an alternative view to be available to illustrate all the elements of the audiophoto. Accordingly, if the data type selection button 241 is pressed during capture, then the image display is toggled between the viewfinder image 72 shown in Figure 7a to a composite of captured image thumbnails 73, each marked with their time of recording relative to the start of the sound passage. The representation of the sound passage 71 is marked in this view with indicators 74 showing the time of recording for the different images.

In addition to pure capture and pure review, it is desirable and possible to support an intermediate arrangement in which new audio or image data can be inserted selectively into the existing set, rather than simply added to the end.

Insertion of such an additional image or sound segment is here carried out from the review mode, with the appropriate context (audiophoto, sound clip, or image) for the insertion being selected in the single audiophoto view on display 23.

When the insertion context is a sound clip, the user presses image capture button 251 to attach a new photo to the clip, or presses sound capture button 252 twice to capture a new sound passage which is appended to the end of the existing sound clip. If the user wishes to insert a new sound segment at an appropriate point during the existing sound passage, this can be done by advancing to and marking with marker button 244 the desired insertion point, and in that state capturing the new sound clip.

When the insertion context is a still image without sound, the user can simply press the image capture button 251 to add a new image after the existing image, or use the sound capture button 252 to record an audio segment which is then attached to the selected image.

When the insertion context is an existing audiophoto, the user can press the image capture button 251 to attach a new image to the sound clip, creating or extending a series of photos for the same clip. The point in the sound passage at which the new image is introduced can be automatically assigned, or manually positioned by use of the marking button 244 as previously described. Alternatively, the sound capture button 252 can be used to record a further sound segment, either to append to the audioclip, or to position within the audioclip by use of the marking button 244 as previously described.

After capture, the following information is stored in the memory 107: images (stored as discrete files), sound passages (stored as discrete files), and timestamping and (where relevant) linking information. There are two possible approaches for this, either of which can be used in satisfactory embodiments. The first is for the image and sound to be stored in their own separate data types, with all linking, timing and selection information stored in a separate index file. This solution is probably the simplest to implement, but is not convenient for selective transfer of information from memory 107 to another device. The second approach is for there to be a multimedia filetype for audiophotos, supporting image, sound, timing and linking information. If such a filetype is used, then this filetype can be used for all information captured (including images alone, and sounds alone) so all files processed by the camera can be of the same filetype. This solution allows each resultant audiophoto to be freestanding as a single file, without reference to an index, rendering selective transfers from memory 107 straightforward. This information can then be transmitted in any of the paths shown in Figure 1: to a personal computer 2 (an effective route for complex audiophotos - which could then be transmitted, for example, by electronic mail), directly to a printer 3 or to a reader appliance 4. For simple images, sound passages, or audiophotos, sending directly to a printer or reader appliance is essentially as described in copending European Patent Application No. EP-A-0 971 260, but differences are required if there are multiple images in an audiophoto. For example, a complex audiophoto sent directly to a printer could be rendered with the visual element shown in a composite form as shown in Figure 6. The reader appliance 4 could also be replaced with a composite reader/viewer appliance (not shown) capable of displaying images and playing back sound to play back an audiophoto as captured or devised at the camera 1: the functions to be provided need only be those offered by the user interface of the camera 1 (possibly retaining the browsing features but not the editing features), though with preferably sufficiently high quality display and sound playback to provide a satisfactory experience to the user.

In addition to still images and sound, it is possible for other data types to be captured at a digital camera. A digital camera can typically be adapted to capture and store short bursts of video without difficulty: such video bursts may be provided in the same manner as sound passages as an augmentation of a still image. Similarly, means to provide a graphic input at the user interface (for example, a pen-based digitiser interface and means for recognising handwriting or a custom alphabet such as Graffiti) may be used to provide graphic input to provide a similar augmentation. Such augmentations may be treated in essentially the same way as sound passages, and may be used as further (or conceivably alternative) elements in a linked group.

As the skilled man will appreciate, many variations upon the features indicated above can be made in devising alternative embodiments of the invention. For example, the structural arrangement of the camera can be changed considerably - display 23 may be used only as a user interface display, with a separate viewfinder being placed elsewhere on the camera, or a different arrangement and type of controls can be employed for the user interface.

## Claims

1. A digital camera comprising:
camera apparatus for capturing still images;
sound recording apparatus for capturing sound passages;
a memory for retaining still images as still image files and sound passages as sound passage files; and **characterized by**
a user interface adapted for selectively linking one or more still image files with one or more sound passage files to form a linked group, and for selectively unlinking one or more files from a linked group.

2. A digital camera as claimed in claim 1, wherein a linked group may consist of one still image file with one or more sound passage files.

3. A digital camera as claimed in claim 1, wherein a linked group may consist of one sound passage file with one or more still image files.

4. A digital camera as claimed in any of claims 1 to 3, wherein the user interface is adapted such that a user can select a first and second view of the image files, wherein in the first view a plurality of sound passage files, still image files or linked groups are displayed in an index format for review, and wherein in the second view an individual sound passage file, still image file or linked group is displayed for editing.

5. A digital camera as claimed in claim 4, wherein in the second view an additional sound passage file, still image file or linked group is also displayable, wherein the user interface is adapted to allow linkage between the displayed files to form a new linked group.

6. A digital camera as claimed in claim 4 or claim 5, wherein in the second view a further sound passage or still image may be captured and linked automatically to the individual sound passage file, still image file, or linked group displayed.

7. A digital camera as claimed in any preceding claim, wherein the digital camera is adapted such that a still image file may be associated with a particular point of time or period of time in the sound passage of a sound passage file.

8. A digital camera as claimed in any preceding claim, wherein the digital camera is adapted such that the camera apparatus may capture one or more still images at the same time that the sound recording apparatus is capturing a sound passage.

9. A digital camera as claimed in claim 8, wherein any still images captured at the same time as a sound passage are provided initially as part of a linked group with the sound passage.

10. A digital camera as claimed in any preceding claim, further comprising a time recording means to mark a captured still image or a captured sound passage with the time of recording.

11. A digital camera as claimed in claim 10 where dependent on claim 8, wherein the time recording means is adapted to mark the time of capture of a captured still image relative to a contemporaneously recorded sound passage.

12. A digital camera as claimed in any preceding claim, wherein the user interface is adapted for selective deletion by a user of a still image file, a sound passage file or part of a sound passage file, or a linked group.

13. A digital camera as claimed in any preceding claim, wherein the user interface is adapted such that sound passage files and still image files of a linked group are viewable, selectively, either as part of the linked group or independently of the linked group.

14. A digital camera as claimed in claim 13, wherein the user interface is adapted so that the sound passage files, the still image files, and the linked objects are all presentable to the user as a separate sequence, and that the user may select between these separate sequences for browsing.

15. A digital camera as claimed in any preceding claim, wherein the memory retains linked groups as separate sound passage files, still image files, and one or more index files containing linking information.

16. A digital camera as claimed in any preceding claim, wherein the memory retains linked groups as multimedia files, containing sound passage information, still image information, and linking information.

17. A digital camera as claimed in claim 16, wherein the sound passage files and the still image files are both multimedia files.

18. A digital camera as claimed in any preceding claim, further comprising a further data recording device for recording of another data type, and wherein the memory device is adapted to record the other data type as a further data type file, and wherein the user interface is adapted for selectively linking one or more further data type files into a linked group, and for selectively unlinking one or more further data type files from a linked group.

19. A digital camera as claimed in claim 18, wherein the further data type is handwriting data, and the further data recording device is a device for recording handwriting in a digital representation.

20. A digital camera as claimed in claim 18, wherein the further data type is a video clip, and the further data recording device is a device for recording video clips.

21. A digital camera as claimed in any preceding claim, wherein the sound recording apparatus and the camera apparatus are arranged for data capture in a substantially common direction.

22. A digital camera as claimed in any preceding claim, wherein the memory is a flash memory device.

23. A digital camera as claimed in any preceding claim, wherein the digital camera is adapted to be handheld by a user for still image and sound passage capture.

24. A program for operating the user interface of a digital camera comprising camera apparatus for capturing still images and sound recording apparatus for capturing sound passages, wherein the program comprises instructions for causing said user interface to link one or more still images with one or more sound passages to form a linked group, and instructions for causing said user interface to unlink one or more elements from a linked group.

## Patentansprüche

1. Eine Digitalkamera, die folgende Merkmale umfaßt:
eine Kameravorrichtung zum Erfassen von Standbildern;
eine Tonaufzeichnungsvorrichtung zum Erfassen von Tonpassagen;
einen Speicher zum Beibehalten von Standbildern als Standbilddateien und Tonpassagen als Tonpassagendateien; und **gekennzeichnet durch**
eine Benutzerschnittstelle, die angepaßt ist zum selektiven Verbinden von einer oder mehreren Standbilddateien mit einer oder mehreren Tonpassagendateien um eine verbundene Gruppe zu bilden, und zum selektiven Trennen von einer oder mehreren Dateien von einer verbundenen Gruppe.

2. Eine Digitalkamera gemäß Anspruch 1, bei der eine verbundene Gruppe aus einer Standbilddatei mit einer oder mehreren Tonpassagendateien bestehen kann.

3. Eine Digitalkamera gemäß Anspruch 1, bei der eine verbundene Gruppe aus einer Tonpassagendatei mit einer oder mehreren Standbilddateien bestehen kann.

4. Eine Digitalkamera gemäß einem der Ansprüche 1 bis 3, bei der die Benutzerschnittstelle angepaßt ist, so daß ein Benutzer eine erste und eine zweite Ansicht der Bilddateien auswählen kann, wobei in der ersten Ansicht eine Mehrzahl von Tonpassagendateien, Standbilddateien oder verbundenen Gruppen in einem Indexformat für die Durchsicht angezeigt sind, und wobei in der zweiten Ansicht eine individuelle Tonpassagendatei, eine Standbilddatei oder eine verbundene Gruppe zum Editieren angezeigt ist.

5. Eine Digitalkamera gemäß Anspruch 4, bei der in der zweiten Ansicht eine zusätzliche Tonpassagendatei, eine Standbilddatei oder eine verbundene Gruppe ebenfalls anzeigbar ist, wobei die Benutzerschnittstelle angepaßt ist, um eine Verbindung zwischen den angezeigten Dateien zu ermöglichen, um eine neue verbundene Gruppe zu bilden.

6. Eine Digitalkamera gemäß Anspruch 4 oder Anspruch 5, bei der in der zweiten Ansicht eine weitere Tonpassage oder ein weiteres Standbild erfaßt werden kann, und automatisch mit der einzelnen angezeigten Tonpassagendatei, Standbilddatei oder verbundenen Gruppe verbunden werden kann.

7. Eine Digitalkamera gemäß einem der vorhergehenden Ansprüche, wobei die Digitalkamera angepaßt ist, so daß eine Standbilddatei einem speziellen Zeitpunkt oder einer Zeitperiode bei der Tonpassage einer Tonpassagendatei zugeordnet werden kann.

8. Eine Digitalkamera gemäß einem der vorhergehenden Ansprüche, wobei die Digitalkamera angepaßt ist, so daß die Kameravorrichtung eines oder mehrere Standbilder zur gleichen Zeit erfassen kann, zu der die Tonaufnahmevorrichtung eine Tonpassage aufnimmt.

9. Eine Digitalkamera gemäß Anspruch 8, bei der alle Standbilder, die zur gleichen Zeit wie eine Tonpassage erfaßt werden, anfangs als Teil einer verbundenen Gruppe mit der Tonpassage geliefert werden.

10. Eine Digitalkamera gemäß einem der vorhergehenden Ansprüche, die ferner eine Zeitaufzeichnungseinrichtung umfaßt, um ein erfaßtes Standbild oder eine erfaßte Tonpassage mit dem Zeitpunkt der Aufnahme zu markieren.

11. Eine Digitalkamera gemäß Anspruch 10, bei der abhängig von Anspruch 8 die Zeitaufzeichnungseinrichtung angepaßt ist, um die Zeit des Erfassens eines erfaßten Standbilds bezüglich einer gleichzeitig aufgezeichneten Tonpassage zu markieren.

12. Eine Digitalkamera gemäß einem der vorhergehenden Ansprüche, bei der die Benutzerschnittstelle für das selektive Löschen einer Standbilddatei, einer Tonpassagendatei oder eines Teils einer Tonpassagendatei oder einer verbundenen Gruppe durch einen Benutzer angepaßt ist.

13. Eine Digitalkamera gemäß einem der vorhergehenden Ansprüche, bei der die Benutzerschnittstelle angepaßt ist, so daß die Tonpassagendateien und Standbilddateien einer verbundenen Gruppe selektiv betrachtbar sind, entweder als Teil der verbundenen Gruppe oder unabhängig von der verbundenen Gruppe.

14. Eine Digitalkamera gemäß Anspruch 13, bei der die Benutzerschnittstelle angepaßt ist, so daß die Tonpassagendateien, die Standbilddateien und die verbundenen Objekte alle dem Benutzer als getrennte Sequenz präsentierbar sind, und daß der Benutzer zwischen diesen getrennten Sequenzen zum Durchblättern wählen kann.

15. Eine Digitalkamera gemäß einem der vorhergehenden Ansprüche, bei der der Speicher verbundene Gruppen als getrennte Tonpassagendateien, Standbilddateien und eine oder mehrere Indexdateien, die Verbindungsinformationen enthalten, speichert.

16. Eine Digitalkamera gemäß einem der vorhergehenden Ansprüche, bei der der Speicher die verbundenen Gruppen als Multimediadateien speichert, die Tonpassageinformationen, Standbildinformationen und Verbindungsinformationen enthalten.

17. Eine Digitalkamera gemäß Anspruch 16, bei der sowohl die Tonpassagendateien als auch die Standbilddateien Multimediadateien sind.

18. Eine Digitalkamera gemäß einem der vorhergehenden Ansprüche, die ferner ein weiteres Datenaufzeichnungsgerät zum Aufzeichnen eines anderen Datentyps umfaßt, und wobei das Speichergerät angepaßt ist, um den anderen Datentyp als weitere Datentypdatei aufzuzeichnen, und wobei die Benutzerschnittstelle angepaßt ist zum selektiven Verbinden von einer oder mehreren weiteren Datentypdateien in eine verbundene Gruppe, und zum selektiven Trennen von einer oder mehreren Datentypdateien von einer verbundenen Gruppe.

19. Eine Digitalkamera gemäß Anspruch 18, bei der der weitere Datentyp handgeschriebene Daten sind, und das weitere Datenaufzeichnungsgerät ein Gerät zum Aufzeichnen von Handgeschriebenem in einer digitalen Darstellung ist.

20. Eine Digitalkamera gemäß Anspruch 18, bei der der weitere Datentyp ein Videoclip ist, und das weitere Datenaufzeichnungsgerät ein Gerät zum Aufzeichnen von Videoclips ist.

21. Eine Digitalkamera gemäß einem der vorhergehenden Ansprüche, bei der die Tonaufzeichnungsvorrichtung und die Kameravorrichtung in einer wesentlichen gemeinsamen Richtung für eine Datenerfassung angeordnet sind.

22. Eine Digitalkamera gemäß einem der vorhergehenden Ansprüche, bei der der Speicher ein Flash-Speichergerät ist.

23. Eine Digitalkamera gemäß einem der vorhergehenden Ansprüche, bei der die Digitalkamera angepaßt ist, um von einem Benutzer für Standbild- und Tonpassagenerfassung in der Hand gehalten zu werden.

24. Ein Programm zum Betreiben der Benutzerschnittstelle einer Digitalkamera, die eine Kameravorrichtung zum Erfassen von Standbildern und eine Tonaufzeichnungsvorrichtung zum Erfassen von Tonpassagen umfaßt, wobei das Programm Befehle, die bewirken, daß die Benutzerschnittstelle eines oder mehrere Standbilder mit einer oder mehreren Tonpassagen verbindet, um eine verbundene Gruppe zu bilden, und Befehle umfaßt, die bewirken, daß die Benutzerschnittstelle eines oder mehrere Elemente von einer verbundenen Gruppe trennt.

## Revendications

1. Une caméra numérique qui comprend:
un appareil de caméra pour détecter des images immobiles;
un appareil d'enregistrement de sons pour détecter des passages sonores;
une mémoire pour retenir des images immobiles sous forme de fichiers d'images immobiles et des passages sonores sous forme de fichiers de passages sonores; et **caractérisée par**
une interface d'utilisateur apte à lier sélectivement un ou plusieurs fichiers d'images immobiles à un ou plusieurs fichiers de passages sonores pour former un groupe lié, et pour délier sélectivement d'un groupe lié un ou plusieurs fichiers.

2. Une caméra numérique selon la revendication 1, dans laquelle un groupe lié peut consister en un fichier d'image immobile et un ou plusieurs fichiers de passages sonores.

3. Une caméra numérique selon la revendication 1, dans laquelle un groupe lié peut consister en un fichier de passage sonore et un ou plusieurs fichiers d'images immobiles.

4. Une caméra numérique selon l'une quelconque des revendications 1 à 3, dans laquelle l'interface d'utilisateur est apte à permettre à un utilisateur de sélectionner une première et une deuxième visualisations des fichiers d'images, dans laquelle une série de fichiers de passages sonores, de fichiers d'images immobiles ou de groupes liés est affichée dans un format d'index pour examen dans une première visualisation, et dans laquelle un fichier individuel de passage sonore, un fichier d'image immobile ou un groupe lié est affiché pour édition dans une deuxième visualisation.

5. Une caméra numérique selon la revendication 4, dans laquelle un fichier additionnel qui peut être de passage sonore ou d'image immobile ou de groupe lié additionnel peut également être affiché dans la deuxième visualisation, et dans laquelle l'interface d'utilisateur est apte à permettre une liaison entre les fichiers affichés pour former un nouveau groupe lié.

6. Une caméra numérique selon la revendication 4 ou 5, dans laquelle un passage sonore ou une image immobile additionnels peuvent être détectés et liés automatiquement dans la deuxième visualisation au fichier de passage sonore, au fichier d'image immobile ou au groupe lié, individuels affichés.

7. Une caméra numérique selon l'une quelconque des revendications précédentes, dans laquelle la caméra numérique est apte à permettre à l'image immobile d'être associée à un instant particulier ou à un laps de temps particulier du passage sonore d'un fichier de passage sonore.

8. Une caméra numérique selon l'une quelconque des revendications précédentes, dans laquelle la caméra numérique est apte à permettre à l'appareil de caméra de détecter une ou plusieurs images immobiles en même temps que l'appareil d'enregistrement sonore est en train de détecter un passage sonore.

9. Une caméra numérique selon la revendication 8, dans laquelle toutes images immobiles détectées en même temps qu'un passage sonore sont fournies initialement en tant que parties d'un groupe lié au passage sonore.

10. Une caméra numérique selon l'une quelconque des revendications précédentes, qui comprend en outre un moyen d'enregistrement de temps pour marquer du temps d'enregistrement une image immobile détectée ou un passage sonore détecté.

11. Une caméra numérique selon la revendication 10 lorsqu'elle dépend de la revendication 8, dans laquelle le moyen d'enregistrement de temps est apte à marquer le temps de détection d'une image immobile par rapport au passage sonore enregistré simultanément.

12. Une caméra numérique selon l'une quelconque des revendications précédentes, dans laquelle l'interface d'utilisateur est apte à permettre à un utilisateur d'annuler sélectivement un fichier d'image immobile, un fichier de passage sonore ou une partie d'un fichier de passage sonore ou un groupe lié.

13. Une caméra numérique selon l'une quelconque des revendications précédentes dans laquelle l'interface d'utilisateur peut permettre de visualiser sélectivement des fichiers de passages sonores et des fichiers d'images immobiles d'un groupe lié, soit en tant que partie du groupe lié, soit indépendamment du groupe lié.

14. Une caméra numérique selon la revendication 13, dans laquelle l'interface d'utilisateur est apte à présenter à l'utilisateur sous forme de séquence séparée les fichiers de passages sonores, les fichiers d'images immobiles, et les objets liés, et l'utilisateur peut sélectionner entre ces séquences séparées pour les parcourir.

15. Une caméra numérique selon l'une quelconque des revendications précédentes, dans laquelle la mémoire retient des groupes liés sous une forme où sont séparés des fichiers de passages sonores, des fichiers d'images immobiles et un ou plusieurs fichiers d'indices contenant une information de liaison.

16. Une caméra numérique selon l'une quelconque des revendications précédentes, dans laquelle la mémoire retient des groupes liés sous forme de fichiers multimédias, qui contiennent une information de passages sonores, une information d'images immobiles et une information de liaison.

17. Une caméra numérique selon la revendication 16, dans laquelle tant les fichiers de passages sonores que les fichiers d'images immobiles sont des fichiers multimédias.

18. Une caméra numérique selon l'une quelconque des revendications précédentes, qui comprend en outre un autre dispositif d'enregistrement de données pour enregistrer un autre type de données, et dans lequel le dispositif de mémoire est apte à enregistrer l'autre type de données sous forme d'un fichier d'un autre type de données, et dans laquelle l'interface d'utilisateur est apte à lier sélectivement en un groupe lié un ou plusieurs fichiers de l'autre type de données, et à délier sélectivement d'un groupe lié un ou plusieurs fichiers de l'autre type de données.

19. Une caméra numérique selon la revendication 18, dans laquelle l'autre type de données consiste en données manuscrites, et l'autre dispositif d'enregistrement de données est un dispositif d'enregistrement de données manuscrites en représentation numérique.

20. Une caméra numérique selon la revendication 18, dans laquelle l'autre type de données est un clip vidéo, et l'autre dispositif d'enregistrement de données est un dispositif d'enregistrement de clips vidéo.

21. Une caméra numérique selon l'une quelconque des revendications précédentes, dans laquelle l'appareil d'enregistrement de sons et l'appareil de caméra sont agencés pour détecter des données dans une direction sensiblement commune.

22. une caméra numérique selon l'une quelconque des revendications précédentes, dans laquelle la mémoire est un dispositif de mémoire flash.

23. Une caméra numérique selon l'une quelconque des revendications précédentes, dans laquelle la caméra numérique est apte à être tenue à la main par un utilisateur pour détecter des images immobiles et des passages sonores.

24. Un programme de mise en oeuvre de l'interface d'utilisateur d'une caméra numérique qui comprend un appareil de caméra pour détecter des images immobiles et un appareil d'enregistrement sonore pour détecter des passages sonores, dans lequel le programme comprend des instructions pour amener ladite interface d'utilisateur à lier une ou plusieurs images immobiles et un ou plusieurs passages sonores afin de former un groupe lié, et des instructions pour amener ladite interface d'utilisateur à délier d'un groupe lié un ou plusieurs éléments.
